# EUROPEAN PATENT APPLICATION

(11) **EP 4 094 924 A1**
(43) Date of publication of application: **30.11.2022**
(21) Application number: 21175830.5
(22) Date of filing: 25.05.2021
(51) Int. Cl.: B29C 64/106, B29C 64/393, B33Y 10/00, B33Y 50/02, B22F 10/18, B22F 10/366

(54) **3D PRINTING BEAD CONFIGURATION**

(71) Applicant: Saberton, Mark, Bonita Springs, FL 34135-6411 (US)
(72) Inventor: Saberton, Mark, Bonita Springs, FL 34135-6411 (US)
(74) Representative: Burrows, Anthony Gregory

(57) **Abstract**

The present invention provides a method for increasing the shear strength of an additive manufactured product part comprising depositing a plurality of layers (110,112,114,116,118,120) of beads of material such that, in a potential shear plane (T) of said part beads overlap one another. An additive manufactured product part comprises a plurality of layers (110,112,114,116,118,120) of beads of material, whereby, in a potential shear plane (T) of said part, beads overlap one another.

## Description

The present invention pertains to additive manufacture or 3D printing. More particularly, it concerns the shear strength of an additive manufactured product. Even more particularly, the present invention concerns the distribution of the beads in 3D printing to improve the shear strength of a so manufactured product.

As is known to those skilled in the art to the which the present invention pertains, 3D printed, or additively manufactured products using fused filament fabrication comprise multiple layers of beads which ordinarily lie co-planar in an X-Y plane and are deposited atop one another along a Z axis.

Typically, these beads are issued from an extruder nozzle and deposited side-by-side and atop one another. The traditional bead takes on a standard geometric configuration such as circular, rectilinear, quadrangular and the like. While the adhesion and shear strength of traditional beads lying atop one another is adequate in their respective Z axes, it is the X-Y plane shear strength which suffers in the layer-to-layer bonding.

Ordinarily, the layer-to-layer interface does not exhibit as much shear strength as the bead(s) itself/themselves. The weak shear strength between the layers is dependent on the polymer and the surface area where cohesion occurs between the layers.

Also, the shear strength depends on any reinforcing fibres and degree of crosslinking. This is especially true when the bead contains reinforcing materials such as fibres and the like. Thus, there is a need to improve the shear strength at the interface between the layers.

The prior art has somewhat recognized and addressed the bead configuration issue in order to improve its properties. For example, US5653925 teaches a process for adjusting the deposition rate of the beads to provide a predetermined porosity greater than zero in prototype modeling.

US9498919 addresses surface characteristics of 3D manufactured products and seeks to improve their surface smoothness.

In US2019/00094, there is taught the inspection of different bead profiles and arrangements.

US2018/0370114 discusses different bead sizes, orientations, sequencing and generation for homogenous materials; it does not address the issues of improving the interlaminar stress weakness.

It is to be appreciated from what has been set forth herein that the prior art does not address the distribution of the beads in order to improve the shear strength at the interface between layers.

It is to this to which the present invention is directed.

According to one aspect of the present invention, there is provided a method for increasing the shear strength of an additive manufactured product part comprising depositing a plurality of layers of beads of material, characterized in that said depositing comprises depositing said beads such that, in a potential shear plane of said part beads overlap one another.

According to another aspect of the present invention, there is provided an additive manufactured product part comprising a plurality of layers of beads of material, characterized in that, in a potential shear plane of said part, beads overlap one another.

The potential shear plane may be substantially orthogonal to the layers, or substantially parallel to said layers, or there may be a plurality of potential shear planes at right angles to each other.

The beads may be elongate and substantially parallel to each other, or may be in the form of blobs.

In an embodiment of the invention, alternate beads may overlap each other in the potential shear plane(s).

The product part can be part of a whole product all of which is additive manufactured, or it can be part of a product of which the remainder is not additive manufactured.

Viewing the invention from various other aspects, there is provided a method for increasing the shear strength of an additive manufactured product part comprising lowering an axis to be strengthened by reducing a bead height of alternating beads on uppermost layers and lowermost layers of beads. This can be achieved by reducing a flow rate of bead material or increasing the speed of movement of, say, a nozzle depositing the bead material. There may additionally or alternatively be provided a method for increasing the shear strength in the Z-axis of an additive manufactured product part comprising reducing a dimension of beads in adjacent layers of beads at alternating termini of each layer by an amount substantially equal to one-half width of other beads within the layer.

In order that the present invention can be clearly and completely disclosed, reference will now be made, by way of example only, to the accompanying drawings, in which:-
Figure 1 is a diagrammatic side elevation of a bead configuration according to an embodiment of the present invention;
Figure 2 is a flow chart depicting the printing sequence of beads in that embodiment;
Figure 3 illustrates diagrammatically a printing technique for creating the bead configuration of that embodiment; and
Figure 4 is a diagrammatic side elevation of an alternate Z-axis strengthened bead configuration.

As noted above and as is known to the skilled artisan, the layer-to-layer bonding of co-planar or parallel beads within the X-Y plane of a 3D printed or additive manufactured article, typically, does not exhibit as much shear strength as the bead itself. This is particularly true when the bead contains reinforcing material such as fibres, etc.

Typically, these so-printed parts generally exhibit only about 20% of the shear strength in the X-Y plane as compared to the cross-planes when including a fibre reinforcement. The shear strength is slightly elevated without the fibre reinforcement.

In accordance herewith, it has been found that by staggering the bead size, the shear strength of the printed part in the X-Y plane can be greatly increased with or without the fibre reinforcement.

Thus, the shear strength of a 3D printed part along the X-Y plane can be increased by staggering the size or height of the bead along the Z-axis. Although the height variant, itself, can vary, preferably, by alternating half height beads at the start of where the strength is needed, ordinarily, at the base of the print, the shear strength is increased.

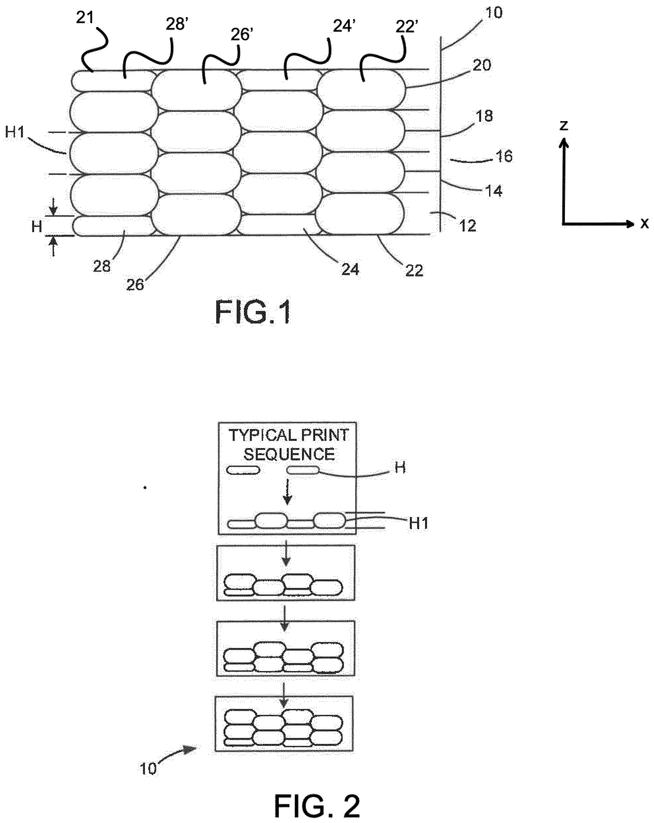

Referring to the drawings, and, particularly, Figures 1-4, an illustrative 3D printed product part, generally denoted at 10, has a lowermost or lower layer 12, a plurality of intermediate layers 14, 16, 18, 20 and an uppermost or upper layer 21. The layers comprise a plurality of beads 22, 24, 26, 28, etc.

As shown in Figures 1 and 2, the lowermost layer 12 is provided with a series (which is in the same sequence as the deposition sequence of the layer 12 along the X-axis) of alternating beads 24, 28 having a height H. The height H is equal to about one-half the height H1 of adjacent beads 22, 26 and overlying beads. Similarly, the uppermost layer 21 has a second series (of the same arrangement of beads as the series of layer 12) of alternating beads 24', 28'. The beads 24', 28' have the height H, as well as adjacent beads 22' and 26' having the height H1. The beads in the intermediate layers 14, 16, 18, 20 all have the height H1. The beads are of flat appearance, particularly of substantially oval appearance, in cross-section.

In achieving this configuration, suitable means such as a slicer (not shown) which may be controlled through suitable means, such as software, is used to control the height. Alternatively, a manual slicer (not shown) may be used.

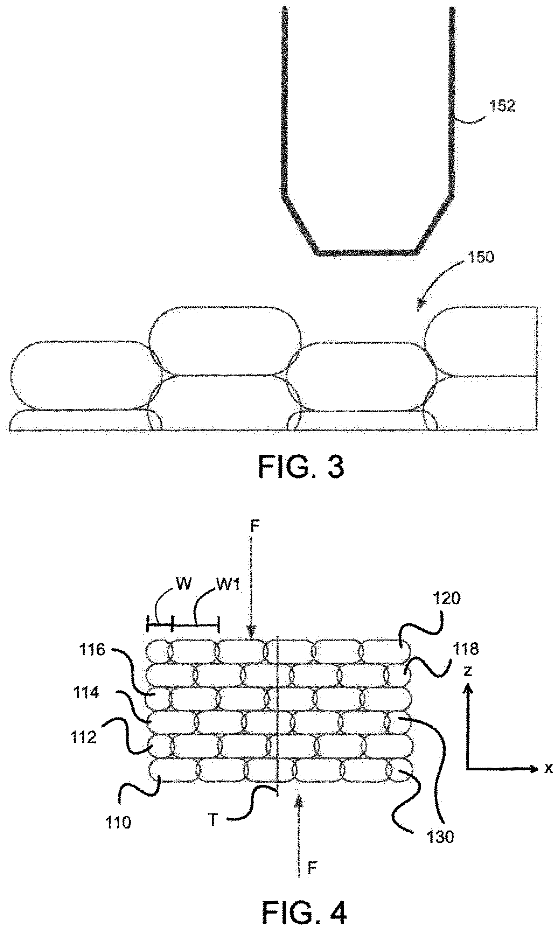

Referring to Figure 3, the lowering of the beads to the height H compared to H1 can be achieved by reducing the flow rate by one-half or increasing the speed of movement of the nozzle 152 to twice that of the adjacent beads to provide the lower height H profile.

Alternatively, a two-stage nozzle can also be used to facilitate this type of bead profile. As noted above, and as shown in Figure 1, the lowermost layer and the uppermost layer each have alternating bead heights H and H1.

Figure 2 illustrates an additive printing sequence typical for achieving the configuration shown in Figure 1. After depositing alternating sized beads in the lowermost layer 12, full sized beads having the height H1 are deposited thereover to form the plurality of intermediate layers 14, 16, 18, 20.

As shown in Figure 3, as a consequence of using the above-described printing technique, a valley 150 is created between spaced apart beads in any one layer apart from the uppermost layer 21. Liquid or molten resin or other material issues from a nozzle 152 such that the resin is deposited in an associated valley 150 which, as shown, is defined by the walls of the adjacent beads. Using this "valley" configuration reduces the porosity of the finished product part.

Figure 4 depicts therein the contemplated result achieved by the embodiment shown in that Figure where T indicates the potential shear plane as a result of forces F of shear stress applied to the product part in the Z-axis direction. The known state of manufacturing with all the beads all the same size throughout the product part, with the beads being co-planar, has a shear strength less than 20% of the current proposals.

As shown in Figure 4, a plurality of bead layers 110, 112, 114, 116, 118 and 120 each comprise a plurality of beads where the terminal bead 130 is reoriented such that its horizontal axis is substantially normal to that of the remaining beads in the layer. Thus, each bead 130 is oriented to have its longitudinal dimension substantially equal at each layer. However, the terminus beads 130 for each alternating layer have a dimension W equal to about one-half of that of the remaining beads in the respective layers which have a dimension W1. This results in a staggering of the substantially vertical, central axes of the beads of the layers such that only those substantially vertical, central axes of the beads of the alternating layers lie in the same vertical axis and the alternating beads are offset with respect thereto.

As noted, a two-stage nozzle or changes in the nozzle velocity and/or changes in the flow rate can be used to create the bead profiles contemplated for use herein.

The present invention is applicable to any 3D printed material, including, for example, resins, such as ABS, ASA, PLA, PETG, polypropylene, TPU, nylon, polycarbonate, PSU, PPSU, PESU, PEI, PEKK, PEEK, as well as metals, ceramics, sand or cement. Useful fillers include, for example, carbon fibre, glass fibre, wood fibre, and various metals. The filler can comprise short fibres, as well as, long fibres, whether milled or not.

In adopting the present manufacturing method described with reference to the drawings, it should be noted that typically, the process is applicable only to the internal structure of the product part, i.e., it is adopted for deposition after the base layer and below the top layer. As a consequence, the present method does not permit a smooth surface because of the discontinuities or disruptions in the bead height. Similarly, the present method alters the porosity of the finished product. It is to be noted that if an increase in the shear strength is needed in the X-Z plane or the Y-Z plane, the staggering is equally applicable thereto, but, in lieu of the height adjustment, the width of the bead is controlled.

The present method does increase the shear strength where it is deployed, be it either in the X-Y plane; X-Z plane, or the Y-Z plane.

In practicing the present method, conventional 3D printing temperatures and pressures are adopted and utilized. The extrudate is amongst the resins identified hereinabove, as well as the other materials which are issued through the extruder head onto the base platen upon which the first layer is deposited.

The temperatures and pressures which are adopted and utilized are those associated with the ordinary extrusion of the materials which are well known to the skilled artisan.

## Claims

1. A method for increasing the shear strength of an additive manufactured product part comprising depositing a plurality of layers of beads of material, **characterized in that** said depositing comprises depositing said beads such that, in a potential shear plane of said part beads overlap one another.

2. A method according to claim 1, wherein said shear plane is substantially orthogonal to said layers.

3. A method according to claim 1, wherein said shear plane is substantially parallel to said layers.

4. A method according to any preceding claim, wherein said beads are elongate and substantially parallel to each other.

5. A method according to any one of claims 1 to 3, wherein said beads are in the form of blobs.

6. A method according to any preceding claim, wherein alternate beads overlap each other in said shear plane.

7. An additive manufactured product part comprising a plurality of layers of beads of material, **characterized in that**, in a potential shear plane of said part, beads overlap one another.

8. A part according to claim 7, wherein said shear plane is substantially orthogonal to said layers.

9. A part according to claim 7, wherein said shear plane is substantially parallel to said layers.

10. A part according to any one of claims 7 to 9, wherein said beads are elongate and substantially parallel to each other.

11. A part according to any one of claims 7 to 9, wherein said beads are in the form of blobs.

12. A part according to any one of claims 7 to 11, wherein said beads are of flat appearance in cross-section.

13. A part according to claim 12, wherein said beads are substantially oval in cross-section.

14. A part according to any one of claims 7 to 13, wherein alternate beads overlap each other in said shear plane.

15. A part according to claim 8, or any one of claims 10 to 14 as appended to claim 8, wherein each bead layer comprises a plurality of beads where a terminal bead is reoriented such that its longitudinal axis is substantially normal to that of the remaining beads in the layer.
